# EUROPEAN PATENT SPECIFICATION

(11) **EP 0 741 359 B1**
(45) Date of publication and mention of the grant of the patent: **23.05.2001**
(21) Application number: 95938010.6
(22) Date of filing: 14.11.1995
(51) Int. Cl.: G06F 17/00, G06T 13/00

(54) **METHOD AND DEVICE FOR SUPPORTING PRODUCTION OF MOVING-PICTURE CD-ROM SOFTWARE**
VERFAHREN UND VORRICHTUNG ZUM UNTERSTÜTZEN DER HERSTELLUNG VON BEWEGTBILDER-CD-ROM-SOFTWARE
PROCEDE ET DISPOSITIF D'AIDE A LA PRODUCTION DE LOGICIEL CD-ROM A IMAGES ANIMEES

(30) Priority: 14.11.1994 JP 27896994
(43) Date of publication of application: 06.11.1996
(73) Proprietor: DAIKIN INDUSTRIES, LIMITED, Osaka-shi Osaka 530 (JP)
(72) Inventor: OOTSUKA, Masato Daikin Industries, Ltd., Kusatsu-shi Shiga 525 (JP); UCHIYAMA, Seiji Daikin Industries, Ltd., Kusatsu-shi Shiga 525 (JP); INADA, Ryozo Daikin Industries, Ltd., Kusatsu-shi Shiga 525 (JP)
(74) Representative: Prüfer, Lutz H., Dipl.-Phys.
(86) International application number: JP9502331
(87) International publication number: WO9615500

(56) References cited:
- EP-A- 0 268 270
- EP-A- 0 578 391
- WO-A-92/07359
- WO-A-93/21635
- JP-A- 5 053 544
- JP-A- 5 282 371
- JP-A- 6 195 050
- JP-A- 6 282 248
- US-A- 5 359 725
- TURNER S R: "ENHANCED AUTHORING FOR CD-I" 5 June 1991 , PROCEEDINGS OF THE INTERNATIONAL CONFERENCE ON CONSUMER ELECTRONICS (ICCE), ROSEMONT, JUNE 5 - 7, 1991, NR. CONF. 10, PAGE(S) 326 - 327 , INSTITUTE OF ELECTRICAL AND ELECTRONICS ENGINEERS XP000289053 * the whole document *

## Description

### Technical Field

The present invention relates to a method and device for supporting production of moving-picture CD-ROM (Compact Disk Read Only Memory) software. More particularly, the present invention relates to a novel method and device for supporting production of moving-picture CD-ROM software which perform simulation of a CD-ROM software (simulation of a moving-picture branching off scenario and simulation of timing control for branching off), reproduction test of entire path within a short time period and the like, without performing a printing processing and reproduction processing to a CD-ROM, when a CD-ROM software is produced for printing it to a CD-ROM.

### Background Art

From past, a moving-picture CD-ROM software is produced and is put to practical use which software includes moving-picture data.

Fig. 10 illustrates a flowchart which represents a conventional procedure for producing a moving-picture CD-ROM software.

In this flowchart, a plan of a moving-picture CD-ROM is produced in step SP1. A handwritten scenario in which vague instructions are generally made, is produced in step SP2. Then, in step SP3, a processing for producing a subject matter, which processing corresponds to a scenario design, is performed. And, in step SP4, programming of a story is performed. The processing in step SP3 and the processing in step SP4 are processing steps, respectively, which processing steps are different from one another and are performed their processings in parallel to one another.

After the processings in step SP3 and step SP4 are performed, the produced subject matter (moving-picture, static-picture, sound and the like) and a program are printed on a CD in step SP5. In step SP6, contents of the CD is confirmed by reproducing the CD. Thereafter, the processing in step SP1 is performed again when varying of the contents of the CD is required. On the other hand, a moving-picture CD-ROM software is completed by adding a CD-ROM title when varying of the contents of the CD is not required.

In conventional moving-picture CD-ROM software producing method, scenario designing and programming of story are separate processings from one another. Therefore, it is difficult to produce a software which suits to designer's intent. Consequently, it is highly possible that contents of a CD are varied after completion of printing of a CD.

Further, recognition of movement, logical verification and verification of physical limitation of a CD-ROM cannot be performed unless actual CD printing and reproduction is performed. Therefore, a required time period for producing a moving-picture CD-ROM software is lengthened and a cost for producing moving-picture CD-ROM software is increased.

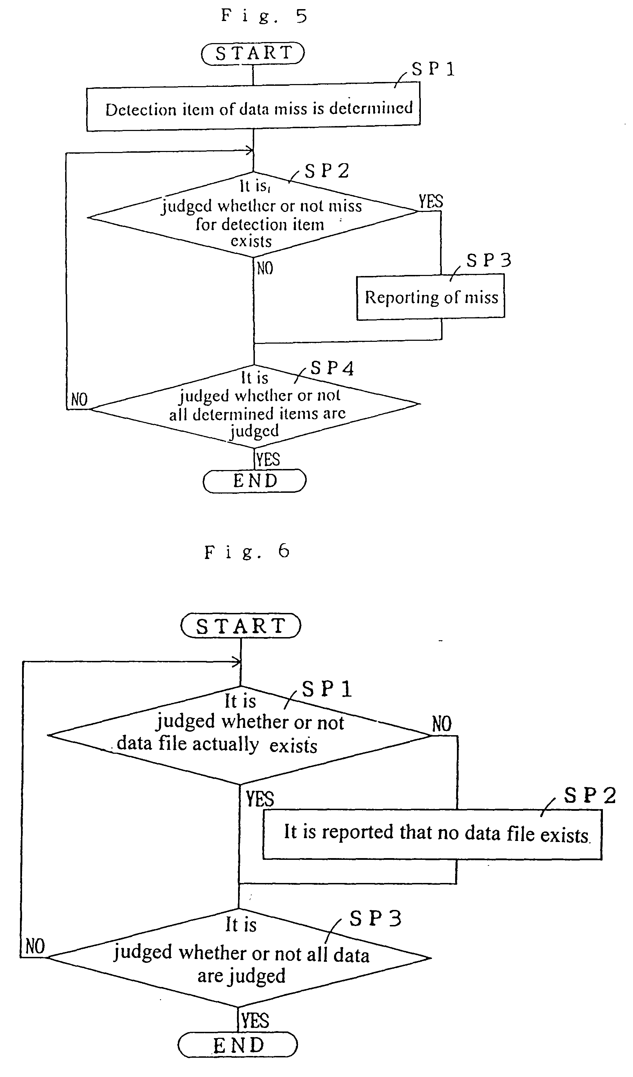

Therefore, recognition of movement, logical verification and verification of physical limitation of a CD-ROM are necessarily performed by printing a CD and reproducing the CD thereafter. And, it is highly possible that contents of the CD should be varied based upon the recognition result and verification result. As a result, it is highly possible that the processing of the flowchart illustrated in Fig. 5 should be repeated by a large number of times. Consequently, a required time period for producing moving-picture CD-ROM software is extremely lengthened and a cost for producing moving-picture CD-ROM software is extremely increased.

The EP-A-0 268 270 discloses a method according to the preamble of claim 1 and a device according to the preamble of claim 2.

It is an object of the present invention to offer a method and a device for supporting production of moving-picture CD-ROM software which method and device can perform simulation of the moving-picture CD-ROM software with a short time period, prior to printing of a CD.

The object is solved by the method of claim 1 or by the device of claim 2.

Further developments of the invention are given in the subclaims.

By the method of claim 1 and the device of claim 2 a simulation of the CD-ROM software, a reproducing test for an entire path with a short time period and the like can be carried out prior to printing of a CD. A required time period until finally obtaining the moving-picture CD-ROM software which suits to designers intents can extremely be shortened. As a result, a cost of the moving-picture CD-ROM software is extremely decreased.

Further features and advantages are comprehensible from the following description of embodiments in connection with the Figures, of which:
Fig. 1 is a block diagram illustrating an embodiment of a device for supporting production of moving-picture CD-ROM software according to the present invention;
Fig. 2 is a flowchart which explains simulation processing;
Fig. 3 is a flowchart which explains automatic checking processing;
Fig. 4 is a flowchart which explains automatically producing processing of software;
Fig. 5 is a flowchart which explains automatically detecting processing of data miss;
Fig. 6 is a flowchart which explains detecting processing of existing or non-existing of data file;
Fig 7 is a flowchart which explains automatic verification processing of scenario;
Fig. 8 is a diagram illustrating a sample of a time-out table;
Fig. 9 is a diagram illustrating processings corresponding to a time-out table; and
Fig. 10 is a flowchart which explains conventional producing procedure of moving-picture CD-ROM software.

### Best Modes For Performing The Invention

Hereinafter, referring to the attached drawings representing embodiments, we explain the present invention in detail.

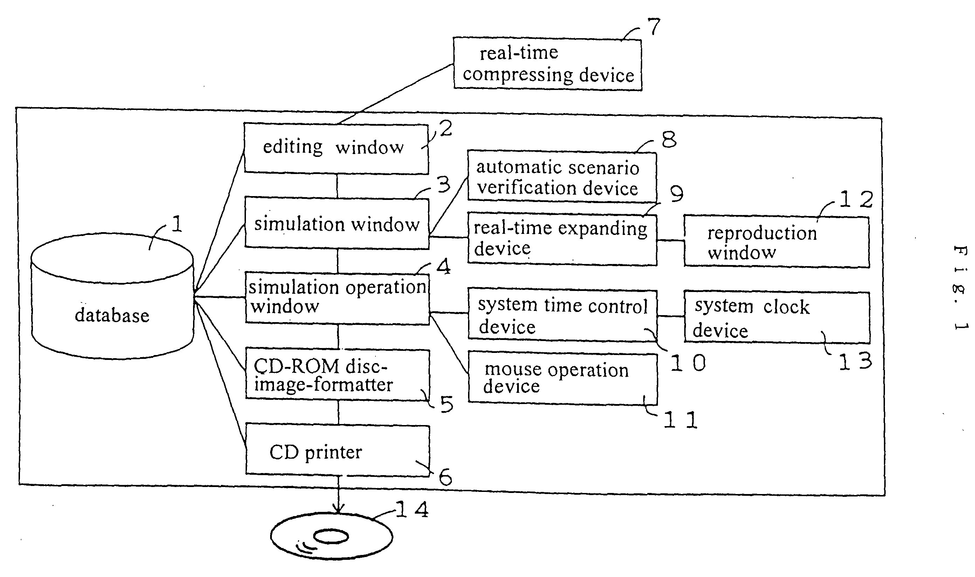

Fig. 1 is a block diagram illustrating an embodiment of a device for supporting production of moving-picture CD-ROM software according to the present invention.

The device for supporting production of moving-picture CD-ROM software includes a data base 1 which holds compressed images, acoustic material, scenario and the like, an editing window 2 which is a user-interface for editing compressed images, acoustic data and scenario, a simulation window 3 which is a user-interface for simulating actions of CD-ROM timing to the scenario on a computer, a simulation operation window 4 which is a user-interface for operating actions of CD-ROM on the computer, a CD-ROM disc-image-formatter 5 which is software for producing disc-image of CD-ROM on a hard disc of the computer, a CD printer 6 for writing the disc-image on write-once CD (CD which can be written only once) 14 which disc-image is produced by the CD-ROM disc-image-formatter 5, a real-time compressing device 7 of external image and sound which device compresses, digitizes and taking in image and audio data, an automatic scenario verification device 8 which is software for automatically verifying and automatically carrying out a stream of scenario, a real-time expanding device 9 of compressed image and sound which device expands compressed image and acoustic data in real time, a system time control device 10 which is software for producing for one data, a time-out table in which reproducing time period and automatically generating processing (for example, automatic pause processing and the like) which processing are generated in a time sequential manner, are put in order following passing of time, and for time controlling simulation responding to clock interruption within the computer and contents of the time-out table, a mouse operation device (pseudo CD-ROM operating device) 11 which is an interface for realizing operation of CD-ROM controller on the computer, a reproduction window 12 which is a video window for displaying expanded image and sound on a computer monitor, and a system clock device 13 for generating inner clock of the computer. The device for supporting production of moving-picture CD-ROM software having the above arrangement may be constructed by a stand-alone computer system, or may be constructed by a computer system in which computers, data base and the like are connected by network circuits.

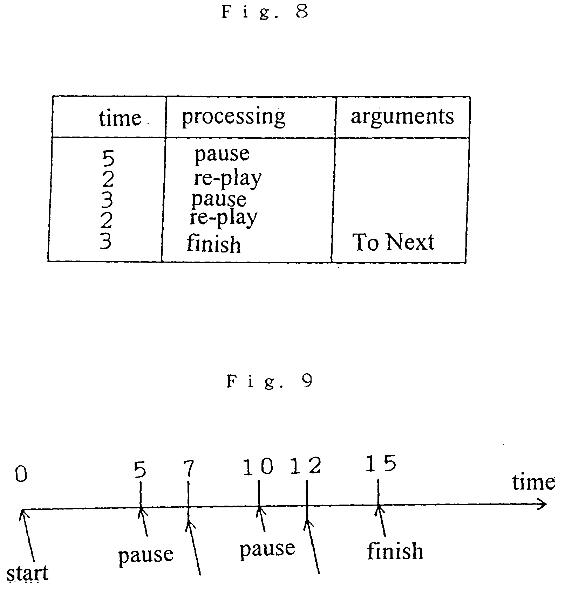

An example of the time-out table is illustrated in Fig. 8 which table is produced by the system time control device 10.

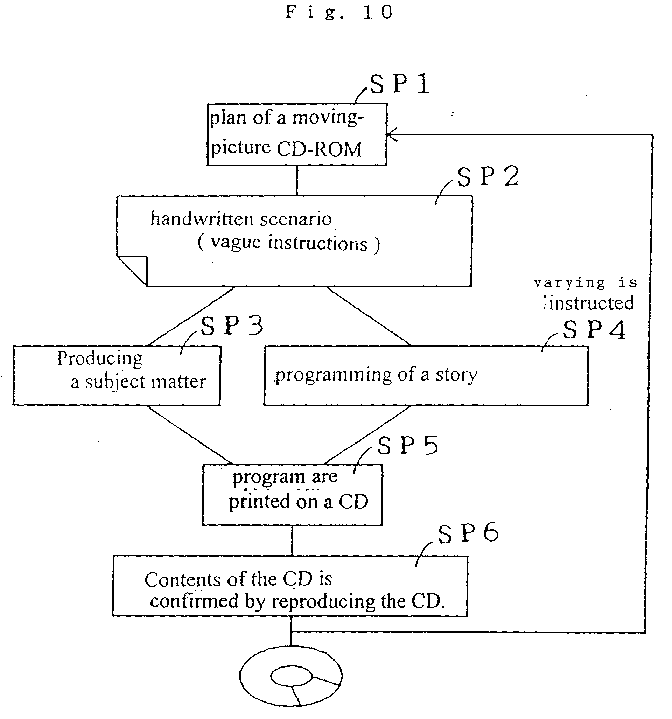

The time-out table illustrated in Fig. 8 represents a case in which pause processing is carried out when 5 seconds has passed from the processing start, re-play processing is carried out when 7 seconds has passed from the processing start, pause processing is carried out when 10 seconds has passed from the processing start, re-play processing is carried out when 12 seconds has passed from the processing start, processing is finished when 15 seconds has passed from the processing start, as is illustrated in Fig. 9.

In a time column of this time-out table, passing times from prior processing are stored. In a processing column of this time-out table, corresponding titles of processing are stored. In an argument column of this time-out table, arguments of corresponding processing are stored. In this time-out table, an argument "To Next" is stored corresponding to the last processing "Finish", therefore processing can be shifted to next processing after the finish processing.

Therefore, moving-picture and acoustic data are compressed and taken in by a unified user-interface, and the compressed and taken data can be managed by making the data and attribute information which is used for producing title as data base. Further, the taken data are made as icons so that addition of data, renewal of data and deletion of data are easily carried out by a designer. Furthermore, moving-picture and compressed acoustic data can be re-edited from the attribute data. When the computer system having the latter arrangement is employed, moving-picture and compressed acoustic data are transferred in real time on the network and are held in common. Further, data and scenario are charged in bulk and evacuated in bulk from a script file which is written by script language.

Furthermore, compressed moving-picture, compressed acoustic data on the hard disc and branching scenario are made their relationship to one another is determined by drag-drop operation of an icon so that software of scenario is automatically produced, therefore CD-ROM title is easily produced only by a designer without carrying out programming. Further, moving-picture software is simulated using the produced relationship. And, simulation result, branching information of scenario and timing control can be re-edited instantaneously, therefore simulation can be repeated on the computer without using a CD-ROM player.

Further, branching scenario can be analyzed automatically so that logical contradiction of scenario and a fact whether or not data can be stored in CD-ROM media are automatically verified based upon points of view of limitation of CD-ROM standards and physical limitation of CD-ROM media.

Further, moving-picture, static-picture material which are displayed on the editing window are applied icon operation so that editing of reproduction information (reproducing time period, description of action after reproduction, loop information of reproduction, description of scenario branching to other material after the reproduction, and the like) of each material can be carried out. Branching information of each material can also be edited by coupling each material by mouse operation in the editing window. Further, simulation processing which is described later, can be carried out and disc-image of CD-ROM is produced based upon the editing information. The device for supporting production of moving-picture CD-ROM software also has a function for data re-arranging for optimizing position of CD-ROM where image is located. The material data, editing information are managed by a data base which is on the hard disc of the computer system.

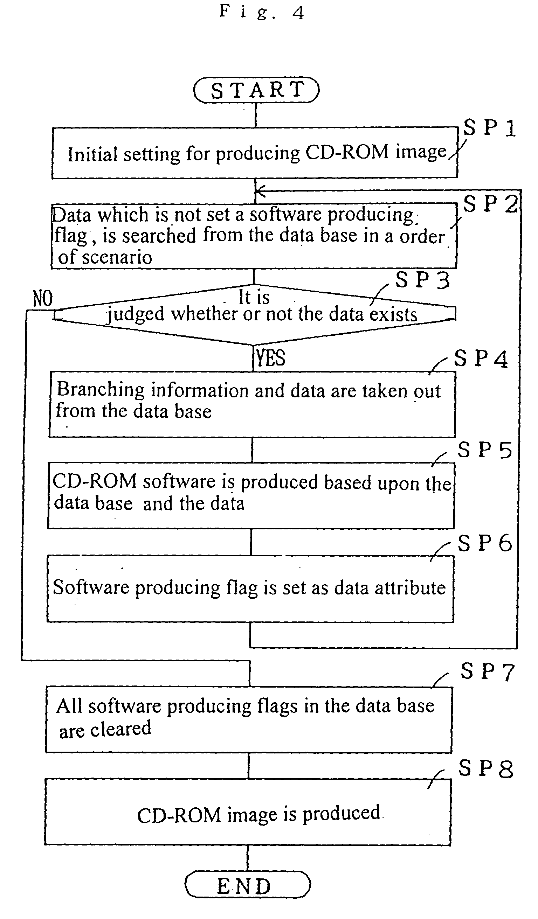

Fig. 4 is a flowchart which explains software automatically producing processing.

In step SP1, initial setting for producing CD-ROM image is carried out. In step SP2, data which is not set a software producing flag, is searched from the data base in a order of scenario. In step SP3, it is judged whether or not the data exists. When it is judged that the data exists, in step SP4, branching information and data are taken out from the data base. In step SP5, CD-ROM software is produced based upon the data base and the data. In step SP6, a software producing flag is set as data attribute, then processing of the step SP2 is carried out again.

When it is judged in step SP3 that no data exists, in step SP7, all software producing flags in the data base are cleared. In step SP8, CD-ROM image is produced. Then, the series of operation is finished.

Therefore, software is produced automatically.

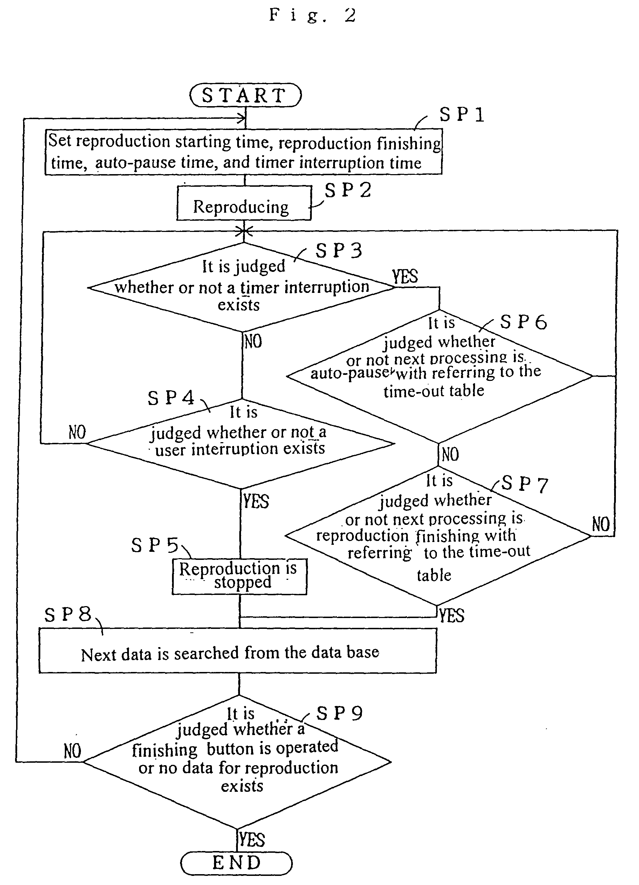

Fig. 2 is a flowchart which explains simulation processing.

In step SP1, reproduction starting time, reproduction finishing time, auto-pause (automatic temporarily stopping) time, timer interruption time which are edited on the editing window 2, are set in the time-out table. In step SP2, software for CD-ROM is reproduced. In step SP3, it is judged whether or not a timer interruption exists. When no timer interruption exists, in step SP4, it is judged whether or not a user interruption exists. When no user interruption exists, the judgment in step SP3 is carried out again.

When it is judged in step SP4 that a user interruption exists, in step SP5, reproduction is stopped. In step SP8, next data is searched from the data base 1. In step SP9, it is judged whether a finishing button is operated or no data for reproduction exists. When it is judged that the finishing button is operated or no data for reproduction exists, then the series of operation is finished. On the contrary, when the finishing button is not operated and data for reproduction exists, operation in step SP1 is carried out again.

When it is judged in step SP3 that a timer interruption exists, in step SP6, it is judged whether or not next processing is auto-pause with referring to the time-out table. When processing is not auto-pause, in step SP7, it is judged whether or not next processing is reproduction finishing. When it is judged that next processing is reproduction finishing, processing in step SP8 is carried out. On the contrary, when it is judged in step SP6 that next processing is auto-pause, or when it is judged in step SP7 that next processing is not reproduction finishing with referring to the time-out table judgment in step SP3 is carried out again.

Therefore, the time-out table is referred at every determined timer interruption time, and reproduction is continued until processing becomes reproduction finishing. When processing becomes reproduction finishing, next data is read out from the data base 1. Initial determination of each time is carried out (a time-out table is produced), then the next data is reproduced. Further, when a user interruption exists, reproduction is stopped, and next data is read out from the data base 1, thereafter, initial determination of each time is carried out and the next data is reproduced. As a result, reproduction of data following a software for CD-ROM is carried out.

That is, moving-picture material data, static-picture material data, times and branching information on the hard disc is read into simulation software in real time, then the same operation as that of CD-ROM player is simulated on the computer system by performing above-mentioned time management.

Further, branching within one compressed moving-picture material (fine time control such as reproducing after N seconds have passed, branching after N seconds have passed in the material) can be carried out.

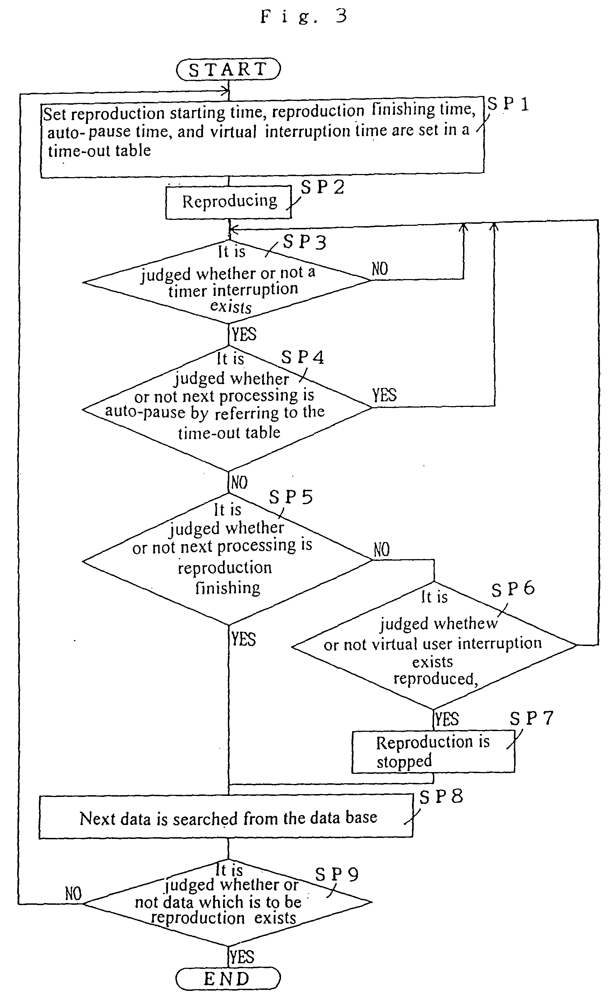

Fig. 3 is a flowchart which explains auto-check processing.

In step SP1, reproduction starting time, reproduction finishing time, auto-pause time, virtual user interruption time (time which supposes user interruption during carrying out simulation), and timer interruption time are set in a time-out table. In step SP2, software for CD-ROM is reproduced. In step SP3, it is judged whether or not a timer interruption exists. When a timer interruption exists, in step SP4, it is judged whether or not next processing is auto-pause by referring to the time-out table. When the next processing is not auto-pause, in step SP5, it is judged whether or not next processing is reproduction finishing. When it is judged in step SP5 that the next processing is reproduction finishing, in step SP8, next data is searched from the data base 1. In step SP9, it is judged whether or not data which is to be reproduced, exists. When no data which is to be reproduced, exists, the series of operation is finished. On the contrary, when it is judged in step SP9 that data which is to be reproduced, exists, processing in step SP1 is carried out again.

When it is judged in step SP5 that next processing is not reproduction finishing, in step SP6, it is judged whether or not virtual user interruption exists by referring to the time-out table. When virtual user interruption exists, in step SP7, reproduction is stopped, and processing in step SP8 is carried out.

When it is judged in step SP3 that no timer interruption exists, or when it is judged in step SP4 that next processing is auto-pause, or when it is judged in step SP6 that no virtual user interruption exists, processing in step SP3 is carried out again.

The present invention analyzes scenario information and automatically carries out entire path (carries out auto-check processing) by arbitrarily determine delay time (interval between reproduction scenes), reproduction time and the like which determination is carried out by a user prior to carrying out simulation.

Therefore, the device for supporting production of moving-picture CD-ROM software judges whether next processing is auto-pause or reproduction finishing at every determined timer interruption by referring to the time-out table, and continues reproduction until reproduction finishing or occurrence of virtual user interruption. When next processing is reproduction finishing or when virtual user interruption exists, next data is read out from the data base 1, initial determination of each time is carried out (a time-out table is produced), thereafter reproduction is carried out. As a result, reproduction of data following software for CD-ROM is automatically carried out. Further, reproduction is stopped at a timing at which virtual user interruption occurs even when next processing is not reproduction finishing, therefore a required time period for reproduction is shortened so that the device carries out reproduction test of entire path with a short time period.

Fig. 5 is a flowchart which explains automatically detecting processing of data miss. Flowchart of each verification processing is described hereinafter which verification processing is carried out in the above auto-check processing.

In step SP1, detection item of data miss is determined. In step SP2, it is judged whether or not miss for detection item exists. When it is judged that miss for detection exists, in step SP3, reporting of miss is carried out. In step SP4, it is judged whether or not all determined items are judged. When all items are judged, a series of operation is finished. On the contrary, when one or more determined items exist, judgment in step SP2 is carried out again. When it is judged in step SP2 that no miss for detection item exists, judgment in step SP4 is immediately carried out.

Therefore, data miss is automatically detected by determining only detection items.

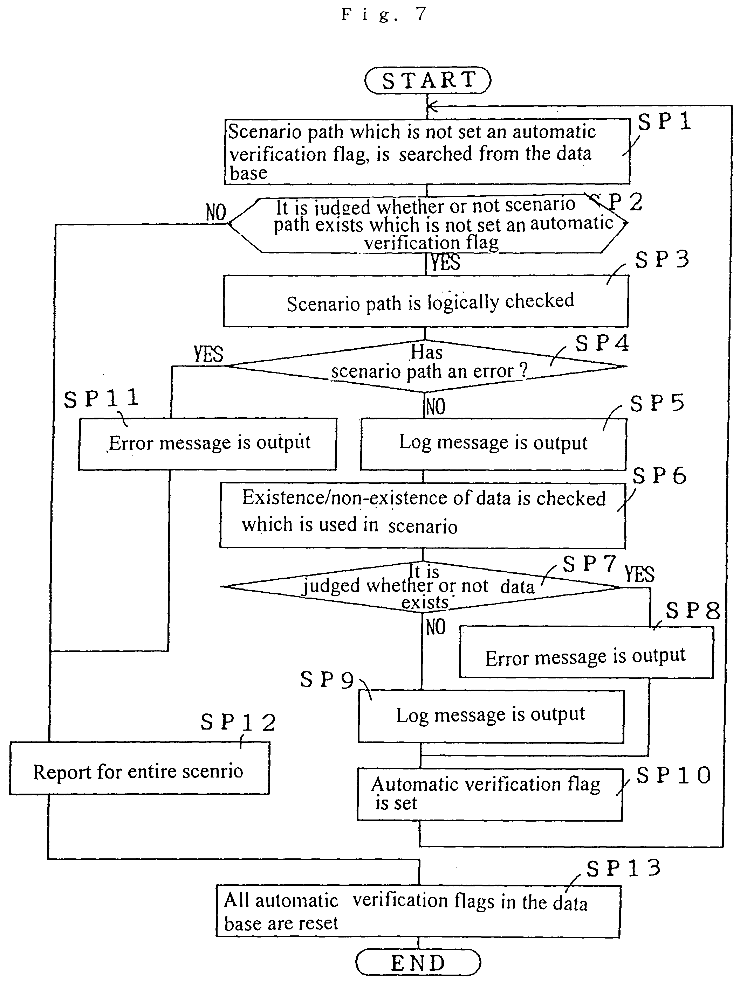

Fig. 6 is a flowchart which explains detection processing of existence/non-existence of data file which is an example of data miss.

In step SP1, it is judged whether or not data file actually exists. When it is judged that no data file exists, in step SP2, it is reported that no data file exists. In step SP3, it is judged whether or not all data are judged. When it is judged that all data are judged, the series of processing is finished. On the contrary, when it is judged that one or more data exist which are not judged, judgment in step SP1 is carried out again. When it is judged in step SP1 that one or more data file exist, judgment in step SP3 is immediately carried out.

Therefore, existence/non-existence of data file is automatically detected.

Fig. 7 is a flowchart which explains automatic verification processing of scenario.

In step SP1, scenario path which is not set an automatic verification flag, is searched from the data base. In step SP2, it is judged whether or not scenario path exists which is not set an automatic verification flag. When it is judged that scenario path exists which is not set an automatic verification flag, in step SP3, scenario path is logically checked. In step SP4, it is judged whether or not scenario path has an error.

When it is judged in step SP4 that scenario path has not an error, in step SP5, a log message is output. In step SP6, existence/non-existence of data is checked which is used in scenario. In step SP7, it is judged whether or not data exists. When it is judged that no data exists, in step SP8, an error message is output. When it is judged that data exists, in step SP9, a log message is output. When processing in step SP8 or processing in step SP9 is carried out, in step SP10, an automatic verification flag is set, then processing in step SP1 is carried out again.

When it is judged in step SP4 that scenario path has an error, in step SP11, an error message is output. In step SP12, a report for entire scenario is output. In step SP13, all automatic verification flags in the data base are reset, then the series of operation is finished. When it is judged in step SP2 that one or more scenario path exist which are not set automatic verification flag, processing in step SP12 is carried out.

Therefore, automatic verification of scenario can be performed.

### Possibility Of Industrial Utilization

As is apparent from the foregoing, the method and device for supporting production of moving-picture CD-ROM software carries out simulation of software for CD-ROM, reproduction test of entire path with a short time period, and the like, prior to CD printing. The method and device extremely shorten a required time period which corresponds to a time period from starting necessary processing to finishing production of moving-picture CD-ROM software which suits to intents of a designer. As a result, cost of moving-picture CD-ROM software is extremely decreased.

## Claims

1. A method for supporting the production of a moving picture CD-ROM software by analyzing and automatically carrying out a scenario,
the method comprising the steps of
- performing editing of the CD-ROM software in response to an instruction of editing to generate a scenario, and
- reading out and reproducing a data from a data base (1) based upon a scenario already designed,
the method being characterized in that it comprises the steps of
- automatically producing a table in which reproducing time periods and corresponding processings are put in sequential order for each data read out and corresponding to the operation characteristics of a CD-ROM player, and
- carrying out the processings corresponding to the contents of the table using timer interruptions for referring to the table.

2. A device for supporting production of moving-picture CD-ROM software by analyzing and automatically carrying out a scenario, the device carries out the steps of
- performing editing of the CD-ROM software in response to an instruction of editing to generate a scenario, and
- reading out and reproducing a data from a data base (1) based upon a scenario already designed
the device is characterized in that the device comprises
a table producing means (10) for automatically producing a table in which reproducing time periods and corresponding processings are put in sequential order for each data readout and corresponding to the operation characteristics of a CD-ROM player, and
a control means (8, 10) for carrying out the processings corresponding to contents of the table using timer interruptions for referring to the table.

3. A device as set forth in claim 2, wherein contents of the table can be varied by a user.

4. A device as set forth in claim 2, wherein said table holds a time determined by a user which time supposes user interruption during carrying out the processings by said control means (8, 10), as virtual user interruption time.

## Patentansprüche

1. Verfahren zum Unterstützen der Herstellung einer CD-ROM Software für bewegte Bilder durch Analysieren und automatisch Ausführen eines Szenarios,
wobei das Verfahren die Schritte beinhaltet
- Durchführen eines Editierens der CD-ROM Software in Antwort auf einen Editierbefehl zum Erzeugen eines Szenarios, und
- Auslesen und Reproduzieren eines Datenwerts von einer Datenbank (1) basierend auf einem schon entworfenen Szenario,
wobei das Verfahren dadurch gekennzeichnet ist, dass es die Schritte aufweist
- automatisch Erzeugen einer Tabelle, in der die Reproduzierzeitperioden und entsprechende Verarbeitungen in aufeinanderfolgender Reihenfolge für jeden ausgelesenen Datenwert und entsprechend den Betriebscharakteristiken eines CD-ROM Spielers gesetzt sind, und
- Ausführen der Verarbeitungen entsprechend den Inhalten der Tabelle unter Verwendung von Zeitgeberunterbrechungen zum Bezugnehmen auf die Tabelle.

2. Vorrichtung zum Unterstützen einer CD-ROM Software für bewegte Bilder durch Analysieren und automatisch Ausführen eines Szenarios, wobei die Vorrichtung die Schritte ausführt
- Ausführen eines Editierens der CD-ROM Software in Antwort auf einen Editierbefehl zum Erzeugen eines Szenarios, und
- Auslesen und Reproduzieren eines Datenwerts von einer Datenbank (1) basierend auf einem bereits entworfenen Szenario,
wobei die Vorrichtung dadurch gekennzeichnet ist, dass die Vorrichtung enthält
- ein Tabellenerzeugungsmittel (10) zum automatisch Erzeugen einer Tabelle, in der die Reproduzierzeitperioden und entsprechende Verarbeitungen in aufeinanderfolgender Reihenfolge für jeden ausgelesenen Datenwert und entsprechend den Betriebscharakteristiken eines CD-ROM Spielers gesetzt sind, und
- ein Steuermittel (8, 10) zum Ausführen der Verarbeitungen entsprechend den Inhalten der Tabelle unter Verwendung von Zeitgeberunterbrechungen zum Bezugnehmen auf die Tabelle.

3. Vorrichtung nach Anspruch 2, wobei Inhalte der Tabelle durch einen Benutzer variiert werden können.

4. Vorrichtung nach Anspruch 2, wobei die Tabelle eine Zeit hält, die durch einen Benutzer bestimmt ist, wobei die Zeit eine Benutzerunterbrechung während des Ausführens der Verarbeitungen durch das Steuermittel (8, 10) als virtuelle Benutzerunterbrechungszeit vorschlägt.

## Revendications

1. Procédé pour aider à la production d'un logiciel CD-ROM à images animées en analysant et effectuant automatiquement un scénario,
le procédé comprenant les étapes consistant à :
- effectuer l'édition du logiciel CD-ROM en réponse à l'instruction d'édition pour générer un scénario, et
- lire et reproduire les données depuis une base de données (1) sur la base d'un scénario déjà écrit,
le procédé étant caractérisé en ce qu'il comprend les étapes consistant à :
- produire automatiquement une table dans laquelle les durées de reproduction et les traitements correspondants sont placés en ordre séquentiel pour chaque lecture de données et correspondant aux caractéristiques fonctionnelles d'un lecteur de CD-ROM, et
- exécuter les traitements correspondant aux contenus de la table en utilisant des interruptions du programmateur pour se référer à la table.

2. Dispositif pour aider à la production d'un logiciel CD-ROM à images animées en analysant et en effectuant automatiquement un scénario, le dispositif effectuant les étapes consistant à :
- effectuer l'édition d'un logiciel CD-ROM en réponse à une instruction d'édition pour générer un scénario, et
- lire et reproduire des données depuis une base de données (1) sur la base d'un scénario déjà écrit
le dispositif étant caractérisé en ce que le dispositif comprend
un moyen de production de table (10) pour produire automatiquement une table dans laquelle les durées de reproduction et les traitements correspondants sont placés dans l'ordre séquentiel pour chaque lecture de données et correspondant aux caractéristiques fonctionnelles d'un lecteur de CD-ROM, et
un moyen de commande (8, 10) pour effectuer les traitements correspondant aux contenus de la table en utilisant les interruptions du programmateur pour se référer à la table.

3. Dispositif selon la revendication 2, dans lequel les contenus de la table peuvent être modifiés par un utilisateur.

4. Dispositif selon la revendication 2, dans lequel ladite table conserve un temps déterminé par un utilisateur, lequel temps suppose une interruption de l'utilisateur pendant une exécution des traitements par ledit moyen de commande (8, 10), comme interruption d'utilisateur virtuelle.
